# EUROPÄISCHE PATENTANMELDUNG

(11) **EP 3 950 609 A1**
(43) Veröffentlichungstag der Anmeldung: **09.02.2022**
(21) Anmeldenummer: 21185293.4
(22) Anmeldetag: 13.07.2021
(51) Int. Cl.: C03B 19/02, C03B 19/06

(54) **OPTOELEKTRONISCHER SENSOR, GLASLINSE UND VERFAHREN ZUR HERSTELLUNG EINER GLASLINSE**

(30) Priorität: 04.08.2020 DE 102020120565
(71) Anmelder: SICK AG, 79183 Waldkirch (DE)
(72) Erfinder: Seemann, Ehrenfried, 79271 St. Peter (DE); Ringwald, Siegfried, 79215 Elzach (DE)

(57) **Zusammenfassung**

Optolektronischer Sensor (1), Glaslinse (2) und Verfahren zur Herstellung mindestens einer Glaslinse (2), wobei mindestens kristalline Glaspulverpartikel (3) oder Quarzglaspulverpartikel mit einem organischen Bindemittel (4) gemischt werden, die Glas-/Bindemittelmischung (5) aus mindestens Glaspulverpartikel (3) und organischem Bindemittel (4) erhitzt wird bis diese teigig oder flüssig ist, eine Spritzgussform (6) für die Glas-/Bindemittelmischung (5) ebenfalls erhitzt wird, die Glas-/Bindemittelmischung (5) mittels Druck in die Spritzgussform (6) gespritzt wird, die Spritzgussform (6) mit der Glas-/Bindemittelmischung (5) abgekühlt wird, der nach dem Abkühlen entstandene feste Glas-/Bindemittelkörper (7) entformt wird, dem Glas-/Bindemittelkörper (7) das Bindemittel (4) durch Entbindern entzogen wird, und der verbleibende Glaskörper (8) gesintert wird, wodurch nach dem Sintern die Glaslinse (2) gebildet ist.

## Beschreibung

Die vorliegende Erfindung betrifft ein Verfahren zur Herstellung mindestens einer Glaslinse gemäß dem Oberbegriff von Anspruch 1, eine Glaslinse gemäß dem Oberbegriff von Anspruch 4, sowie einen optoelektronischen Sensor gemäß dem Oberbegriff von Anspruch 17.

Die DE 10 2014 113 854 A1 offenbart ein Verfahren zur Herstellung eines optischen Glaselements, mit folgendem Ablauf: a) Aufbringung einer flüssigen Prägemasse auf einen Prägestempel, b) Prägung der Prägemasse bei einer Temperatur kleiner als 500°C, c) Aushärtung der Prägemasse, d) Sinterung der Prägemasse und dadurch Urformung des optischen Glaselements.

Die WO 2007 079 001 A1 betrifft allgemein die Herstellung von Glas und Glaskeramikartikeln aus Glaspulver durch Pulverspritzgießen und ein Verfahren zur Herstellung von Glas und Glaskeramikartikeln durch Pulverspritzguss und dadurch hergestellte Artikel.

Eine Technik, die zum Formen von Glas und Glaskeramik zu komplexen Formen nützlich ist, ist das Pulverspritzgießen. Beim Pulverspritzgießen wird ein Pulver mit einem Polymerbindemittel gemischt und die Mischung wird dann spritzgegossen. Nach dem Entformen wird der resultierende Artikel gelöst und gesintert. Eine hohe Pulverbeladung (hoher Pulveranteil und niedriger Bindemittelanteil) ist wünschenswert, um eine übermäßige Porosität, Verformung und ein übermäßiges Schrumpfen des fertigen Teils zu vermeiden. Während das Pulverspritzgießen in großem Umfang auf die Metallumformung und bis zu einem gewissen Grad bei keramischen Umformprozessen angewendet wurde, wurde dem Pulverspritzgießen von Materialien auf Glasbasis wenig Aufmerksamkeit geschenkt. Dies kann daran liegen, dass Glaspulverpartikel typischerweise ziemlich unregelmäßig sind, während die allgemein verstandene ideale Partikelform für das Pulverspritzgießen kugelförmig mit einem geringen Aspektverhältnis ist, um die Fließ- und Packungsfähigkeiten der Pulver- und Bindemittelmischung zu maximieren.

Die WO 2004 085 322 A1 offenbart die Herstellung von Quarzglasteilen für Lampenanordnungen. Solche Teile sind beispielsweise der Reflektor der Lampe und die transparente Hülle der Lampe.

Das Verfahren gemäß der WO 2004 085 322 A1 umfasst zur Herstellung von Quarzglasteilen für Lampenanordnungen einen Schritt des Mischens von kristallinem oder amorphem Siliciumdioxidpulver mit einer Bindemittelsubstanz, einen Schritt des Zuführens des Mischung von Siliciumdioxidpulver und Bindemittelsubstanz zu einer Spritzgussvorrichtung, um ein geformtes Produkt durch Spritzgießen herzustellen, einen Schritt zum Entfernen der Bindemittelsubstanz von dem Produkt und einen Schritt zum Sintern des Produkts bei einer hohen Temperatur. Die Produktion ist somit in zwei Stufen unterteilt. In der ersten Stufe erhält das Produkt die erforderliche Form, die jede Form sein kann, die in einem Spritzgussvorgang erhalten werden kann, und in der zweiten Stufe erhält das Produkt die Eigenschaften von Quarzglas.

In der ersten Stufe wird Silikapulver mit einer Bindemittelsubstanz gemischt, um eine Mischung zu erhalten, die für einen Spritzgussvorgang geeignet ist. Beispielsweise ist eine solche Bindemittelsubstanz Polyethylen, das mit Polyethylenglykol gemischt ist. Es wurde herausgefunden, dass das Mischen gleicher Volumina einer solchen Bindemittelsubstanz und eines Siliciumdioxidpulvers ein Material ergibt, das zu einem Produkt von relativ komplexer Form spritzgegossen werden kann.

Nach dem Spritzgussvorgang wird die Bindemittelsubstanz aus dem Material des geformten Produkts entfernt. Abhängig von der Art der Bindemittelsubstanz kann diese Entfernung durch Erhitzen des Produkts und / oder durch einen anderen Vorgang oder Prozess erfolgen. In derzweiten Stufe wird nach dem Entfernen der Bindemittelsubstanz das Material des geformten Produkts durch Erhitzen des Materials gesintert, so dass das endgültige Quarzglasprodukt erhalten wird.

Eine Aufgabe der Erfindung besteht darin, eine Glaslinse mit einer hohen Oberflächengüte herzustellen. Weiter besteht die Aufgabe darin eine Glaslinse und einen optoelektronischen Sensor bereitzustellen.

Die Aufgabe wird gemäß Anspruch 1 gelöst durch ein Verfahren zur Herstellung mindestens einer Glaslinse, wobei mindestens kristalline Glaspulverpartikel oder Quarzglaspulverpartikel mit einem organischen Bindemittel gemischt werden, die Glas-/Bindemittelmischung aus mindestens Glaspulverpartikel und organischem Bindemittel erhitzt wird bis diese teigig oder flüssig ist, eine Spritzgussform für die Glas-/Bindemittelmischung ebenfalls erhitzt wird, die Glas-/Bindemittelmischung mittels Druck in die Spritzgussform gespritzt wird, die Spritzgussform mit der Glas-/Bindemittelmischung abgekühlt wird, der nach dem Abkühlen entstandene feste Glas-/Bindemittelkörper entformt wird, dem Glas-/Bindemittelkörper das Bindemittel durch Entbindern entzogen wird, der verbleibende Glaskörper gesintert wird, wodurch nach dem Sintern die Glaslinse gebildet ist.

Gemäß der Erfindung werden Glaslinsen im Spritzgussprozess hergestellt. Nach dem Entbinde- und Sinterprozess besitzt die Glaslinse bereits Oberflächen mit einer hohen Oberflächengüte, so dass keine Nacharbeit mehr erforderlich ist und die Glaslinse direkt in einem optischen System verwendet werden kann.

Die vorliegende Erfindung umfasst eine Glaslinse, wobei die Glaslinse mittels einem Verfahren nach mindestens einem der Ansprüche 1 bis 3 hergestellt ist.

Die vorliegende Erfindung umfasst einen optoelektronischen Sensor mit einer Glaslinse nach mindestens einem der Ansprüche 4 bis 16.

Die Glaslinse weist vorteilhaft keine Spannungsdoppelbrechung auf. Herkömmliche Glaslinsen erhalten durch den Abkühlprozess nach dem Pressen eine innere Spannung. Diese Spannung zeigt sich durch eine Spannungsdoppelbrechung, die polarisiertes Licht zu einem gewissen Maß depolarisiert. Häufig nutzen optoelektronische Sensoren für ihre Funktion, wie z. B. Reflexionslichtschranken polarisiertes Licht. Herkömmliche Glaslinsen für Polarisationsanwendungen müssen nachteilig nach dem ersten Abkühlprozess erhitzt und dann über einen längeren zeitlichen Vorgang kontrolliert abgekühlt werden, was auch als Feinkühlen bezeichnet wird.

Beim vorliegenden Glasspritzguss erhält man direkt nach dem erfindungsgemäßen Herstellungsverfahren spannungsfreie Glaslinsen.

Da bei der vorliegenden Glaslinse fast keine Nacharbeit, wie beispielsweise Polieren oder Schleifen mehr notwendig ist, sind diese zum einen kostengünstiger und es entsteht weniger Ausschuss durch Bruch, da die risikobehaftete Nacharbeit entfällt.

Somit können Oberflächen der Glaslinse gebildet werden mit einem Mittenrauwert von ca. kleiner 0,4 µm, bevorzugt bis ca. kleiner 0,2 µm und besonders bevorzugt bis kleiner 0,1 µm.

Die Glas-/Bindemittelmischung und die Spritzgussform werden gleichmäßig erwärmt und dann wird die Glas-/Bindemittelmischung in die Spritzgussform gespritzt.

Das Ausgangsmaterial besteht aus Glaspulverpartikeln oder Quarzglaspulverpartikeln bzw. Siliziumoxidpulverpartikeln und einem organischen Bindemittel, dass die Verbindung zwischen den Partikeln herstellt.

Die Glaspulverpartikel werden sehr fein, nämlich in Größen im nm-Bereich mit dem organischen Bindemittel gemischt. Dadurch entsteht bereits bei der Mischung ein sehr feines Pulvergemisch, wodurch in der Schmelze, also im teigigen oder flüssigen Zustand der Glas-/Bindemittelmischung eine homogene Mischung gebildet wird.

Beim Entbindern wird der Glas-/Bindemittelmischung des Glas-/Bindemittelkörpers das organische Bindemittel entzogen. Dazu wird der Glas-/Bindemittelkörper soweit erhitzt, dass das Bindemittel entweichen kann. Um die Struktur des verbleibenden Glaskörpers während des Entbinderns zu erhalten sind ggf. weitere Formen vorgesehen, die das Entweichen des Bindemittels ermöglichen.

Im anschließenden Sinterprozess wird der Glaskörper umgangssprachlich gebacken, so dass eine Porosität des Glaskörpers verschwindet und ein homogener einstückiger Glaskörper als Glaslinse entsteht, wobei die Glaspulverpartikel nahezu vollständig verschmelzen.

Sowohl beim Entbindern, wie auch beim Sintern schrumpft die Glaslinse auf die gewünschten finalen Abmessungen. Der Grand der Schrumpfung kann beispielsweise 10 bis 30 Volumen-% betragen und wird im Wesentlichen durch das Mischungsverhältnis der Glas-/Bindemittelmischung bestimmt. Der Grad der Schrumpfung wird daher bereits bei der Konstruktion der Form und der Größe der Spritzgussform berücksichtigt. Die beim Mischen entstehenden Agglomerate werden damit im Sinterprozess zu Glas ohne Fehlstellen (ohne Gefügeauflockerung). Fehlstellen nach dem Sinterprozess würde bedeuten, dass die opt. Funktion der Glaslinse beeinträchtigt wird. Diese Fehlstellen werden jedoch gemäß der vorliegenden Erfindung vermieden.

Das Verhindern der Fehlstellen hängt teilweise vom Mischungsverhältnis von Glaspulverpartikeln und dem organischen Bindemittel ab. Wichtig ist auch die chem. Verbindung und Anordnung zwischen Glaspulverpartikel und Bindemittel.

Das Entbindern und Sintern kann unabhängig getrennt nacheinander erfolgen oder aber auch gleichzeitig in einem Prozess-Schritt.

Bei der Glaslinse kann es sich vorzugsweise um eine sphärische Glaslinse handeln. Dabei ist mindestens eine optisch aktive Fläche sphärisch. Das heißt, diese Fläche ist ein Oberflächenausschnitt einer Kugel.

Es können auch bi-konvexe, plan-konvexe, konkav-konvexe, konvex-konkave, plan-konkave oder bi-konkave oder ähnliche Glaslinsen hergestellt werden. Weiter können auch asphärische Glaslinsen hergestellt werden, je nach gewünschtem Anwendungsfall des optoelektronischen Sensors. Es können Glaslinsen mit einer hohen Funktionsdichte bzw. eine Mehrfunktionenglaslinse bereitgestellt werden.

In Weiterbildung der Erfindung weist das organische Bindemittel Polyacetat, Polyoxymethylen und/oder Wachs auf

Polyacetat und Polyoxymethylen sind hochmolekulare thermoplastische Kunststoffe. Die farblosen, teilkristallinen Polymere werden zur Herstellung der Glaslinsen im Spritzgußverfahren verwendet. Wegen der hohen Steifigkeit, niedrigen Reibwerten und guter Dimensionsstabilitäten werden Polyoxymethylene für die Herstellung der Präzisionsteile, wie der vorliegenden Glaslinse eingesetzt. Alternativ oder zusätzlich kann auch Wachs als Bestandteil des organischen Bindemittels vorgesehen sein.

In Weiterbildung der Erfindung weist die Glas-/Bindemittelmischung mindestens 40 Volumen-%, mindestens 50 Volumen-%, mindestens 60 Volumen-% oder mindestens 65 Volumen-% Glaspulverpartikel oder Quarzglaspartikel auf.

Je höher der Anteil an Glaspulverpartikel oder Quarzglaspartikel ist, desto einfacher ist es die Genauigkeit der hergestellten Glaslinse zu erzeugen bzw. zu gewährleisten, da eine gute Formleistung aufrechterhalten wird und da eine Schrumpfprozess beim Entbindern minimiert ist. Gemäß der Erfindung können auch noch höhere Anteile von Glaspulverpartikel oder Quarzglaspartikel vorgesehen sein, von mindestens 70 Volumen-%, oder mindestens 75 Volumen-%. Je höher der Anteil der Glaspulverpartikel ist desto kompakter und damit formstabiler ist ein gebildeter Glas-/Bindemittelkörper, welcher auch als ,Grünling' bezeichnet wird, welcher anschließend entbunden und gesintert wird. Jedoch muss auch genügend Bindemittel vorhanden sein, um die Glaspulverpartikel miteinander ausreichend formstabil zu verbinden.

In Weiterbildung der Erfindung weist die Glaslinse mindestens eine ebene seitlich Fläche auf. Dadurch kann die Glaslinse kompakter hergestellt werden, da die Glaslinse seitlich begrenzt ist. Beispielsweise weist die Glaslinse zwei gegenüberliegende ebene seitliche Flächen auf, wodurch die Glaslinse noch kompakter ausgebildet ist. Die ebene seitliche Fläche wird direkt beim Herstellungsverfahren bzw. beim Herstellungsprozess gebildet. Es ist kein nachfolgender Bearbeitungsschritt erforderlich. Die Spritzgussform weist eine Kontur bzw. Form für die mindestens eine ebene seitliche Fläche auf.

In Weiterbildung der Erfindung weist die Glaslinse mindestens eine Fang- oder Zentrierkontur auf. Die Fang- oder Zentrierkonturen dienen dazu die Glaslinse zu zentrieren und/oder zu fixieren. Dadurch, dass die Glaslinse die Fang- oder Zentrierkontur aufweist kann die Glaslinse kompakter hergestellt werden. Die Fang- oder Zentrierkontur wird direkt beim Herstellungsverfahren bzw. beim Herstellungsprozess gebildet. Es ist kein nachfolgender Bearbeitungsschritt erforderlich. Die Spritzgussform weist eine Kontur bzw. Form für die mindestens eine Fang- oder Zentrierkontur auf.

In Weiterbildung der Erfindung weist die Glaslinse mindestens einen Fang- oder Zentrierstift auf. Der Fang- oder Zentrierstift dienen dazu die Glaslinse zu zentrieren und/oder zu fixieren. Dadurch, dass die Glaslinse den Fang- oder Zentrierstift aufweist kann die Glaslinse kompakter hergestellt werden. Der Fang- oder Zentrierstift wird direkt beim Herstellungsverfahren bzw. beim Herstellungsprozess gebildet. Es ist kein nachfolgender Bearbeitungsschritt erforderlich. Die Spritzgussform weist eine Kontur bzw. Form für den mindestens eine Fang- oder Zentrierstift auf.

In Weiterbildung der Erfindung weist die Glaslinse mindestens einen Hinterschnitt auf. Der Hinterschnitt kann beispielsweise die Befestigung bzw. Zentrierung der Linse verbessern. Der Hinterschnitt wird direkt beim Herstellungsverfahren bzw. beim Herstellungsprozess gebildet. Es ist kein nachfolgender Bearbeitungsschritt erforderlich. Die Spritzgussform weist eine Kontur bzw. Form für den mindestens einen Hinterschnitt auf.

In Weiterbildung der Erfindung weist die Glaslinse mindestens eine stufige Struktur auf. Die stufige Struktur kann beispielsweise die Befestigung bzw. Zentrierung der Linse verbessern. Beispielsweise rasten Schnapphaken eines Aufnahmekörpers in die stufige Struktur ein. Die stufige Struktur wird direkt beim Herstellungsverfahren bzw. beim Herstellungsprozess gebildet. Es ist kein nachfolgender Bearbeitungsschritt erforderlich. Die Spritzgussform weist eine Kontur bzw. Form für die mindestens einen stufige Struktur auf.

In Weiterbildung der Erfindung ist die Glaslinse eine Doppellinse, wobei die zwei Glaslinsen der Doppellinsen über einstückige seitliche Stege miteinander verbunden sind, wobei zwischen den Glaslinsen und zwischen den Stegen ein Durchbruch vorhanden ist. In dem Durchbruch kann eine optische Blende angeordnet sein, um eine optische Isolierung zwischen den Glaslinsen zu verbessern. Damit ist die Doppellinse einstückig ausgebildet und die zwei Linsen der Doppellinse sind bereits durch den Herstellungsprozess zueinander ausgerichtet und in ihrer Lage zueinander definiert. Die Doppellinse wird direkt beim Herstellungsverfahren bzw. beim Herstellungsprozess gebildet. Es ist kein nachfolgender Bearbeitungsschritt erforderlich. Die Spritzgussform weist eine Kontur bzw. Form für die Doppellinse auf.

In Weiterbildung der Erfindung weist die Glaslinse mindestens ein Gewinde auf. Mittels des Gewindes kann beispielsweise eine Befestigung bzw. Zentrierung der Linse erfolgen. Das Gewinde wird direkt beim Herstellungsverfahren bzw. beim Herstellungsprozess gebildet. Es ist kein nachfolgender Bearbeitungsschritt erforderlich. Die Spritzgussform weist eine Kontur bzw. Form für das Gewinde auf, nämlich beispielsweise einen Ausdrehkern der nach dem Erkalten des Glas-/Bindemittelkörpers aus der Spritzgussform herausgedreht wird.

In Weiterbildung der Erfindung weist die Glaslinse eine Öffnung entlang der optischen Achse auf. Damit kann ein Autokollimationssensor realsiert werden bei dem die optische Achse des Senders und die optische Achse des Empfängers zusammenfallen. Dabei wird der Lichtstrahl des Senders durch die Öffnung der Glaslinse geführt. Die Öffnung wird direkt beim Herstellungsverfahren bzw. beim Herstellungsprozess gebildet. Es ist kein nachfolgender Bearbeitungsschritt erforderlich. Die Spritzgussform weist eine Kontur bzw. Form für die Öffnung auf.

In Weiterbildung der Erfindung weist die Glaslinse mindestens eine refraktive und/oder mindestens eine diffraktive Struktur auf. Die diffraktive Struktur hat beispielsweise eine Strukturgröße von bis zu 1 µm.

Es kann beispielsweise eine Glaslinse mit nur diffraktiven Strukturen oder auch eine Glaslinse mit nur refraktiven Strukturen hergestellt und gebildet werden.

Jedoch sind ebenso Glaslinsen vorgesehen mit einer mindestens einer refraktiven und mindestens eine diffraktive Struktur. Beispielsweise weist eine erste Seite bzw. eine Vorderseite der Glaslinse mindestens die refraktive Struktur auf und eine zweite Seite bzw. eine Rückseite der Glaslinse mindestens die diffraktive Struktur auf.

Die mindestens eine refraktive Struktur und/oder mindestens eine diffraktive Struktur wird direkt beim Herstellungsverfahren bzw. beim Herstellungsprozess gebildet. Es ist kein nachfolgender Bearbeitungsschritt erforderlich. Die Spritzgussform weist eine Kontur bzw. Form für die mindestens eine refraktive und/oder die mindestens eine diffraktive Struktur auf.

In Weiterbildung der Erfindung weist die Glaslinse eine wasserabweisende Oberfläche bzw. hydrophobe Oberfläche mit einer geringen Benetzbarkeit auf. Die hydrophobe oder superhydrophobe Oberfläche ist aufgrund der Oberflächenbeschaffenheit wasserabweisend.

Beispielsweise bildet die Oberfläche etwa 10 bis 20 Mikrometer hohe und 10 bis 15 Mikrometer voneinander entfernte gewölbte Erhebungen, welche dazu führen, dass die Oberflächenspannung von Wasser erhalten bleibt und die Wassertröpfchen abperlen. Somit hat Wasser nicht mehr die Möglichkeit, in die Zwischenräume der Erhebungen zu gelangen, was zur Folge hat, dass sich die Kontaktfläche zwischen Wasser und Oberfläche erheblich verringert.

Die Hydrophobie von Oberflächen wird über den Kontaktwinkel bestimmt. Je höher der Kontaktwinkel, desto hydrophober die Oberfläche. Oberflächen mit einem Kontaktwinkel <90° werden als hydrophil, solche mit einem Kontaktwinkel >90° als hydrophob bezeichnet. Gemäß der vorliegenden Erfindung können Kontaktwinkel von bis zu 160° (Superhydrophobie) erreicht werden. Das bedeutet, dass nur etwa 2 bis 3 % der Tropfenoberfläche mit der Oberfläche der Glaslinse in Kontakt stehen, diese also eine extrem geringe Benetzbarkeit besitzt. Die Adhäsion zwischen Glaslinsenoberfläche und Wassertropfen ist dabei so gering, dass das Wasser leicht abperlen kann. Aufliegende Schmutzpartikel, die ebenfalls nur eine kleine Kontaktfläche besitzen, werden dadurch mitgeführt und weggespült. Selbst hydrophobe Schmutzpartikel werden von der Glaslinsenoberfläche abgewaschen, weil deren Adhäsion zur Glaslinsenoberfläche geringer ist als zum Wassertropfen.

In Weiterbildung der Erfindung weist die Glaslinse mehrere Zonen mit unterschiedlichen Brennweiten auf. Beispielsweise sind die Zonen ringförmig angeordnet mit einer zentralen kreisförmigen inneren Zone, welche von den ringförmigen Zonen umgeben ist. Damit können bessere Detektionsergebnisse für einen Distanzsensor beispielsweise im Nahbereich und im Fernbereich erzielt werden.

Jedoch können die Zonen auch abschnittsförmig nacheinander angeordnet sein. Beispielsweise bei einer länglich ausgebildeten Glaslinse.

In Weiterbildung der Erfindung ist die Glaslinse eine Freiformlinse. Mit einer Freiformlinse können im Falle einer Freiformlinse für einen Lichtsender gewünschte Beleuchtungsmuster bzw. Beleuchtungsformen erzeugt werden. Beispielsweise linienförmige oder ovalförmige Beleuchtungsspots oder auch eine hellere Beleuchtung zu den Bildrändern hin um einem empfängerseitigen Randlichtabfall, der Vignettierung, entgegen zu wirken. Im Falle einer Freiformlinse für einen Lichtempfänger können insbesondere für ortsaufösende Empfangselemente bzw. Zeilenempfangselemente oder Arrayempfangselemente von Triangulationslichttastern unterschiedliche Empfangsintensitäten bzw. unterschiedliche Empfangslichtformen erzeugt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1a bis 1i: ein Verfahren zur Herstellung mindestens einer Glaslinse;
- Figur 2: einen optoelektronischen Sensor;
- Figur 3: eine Spritzgussform;
- Figur 4: eine sphärische Glaslinse;
- Figur 5: eine bi-konvexe Glaslinse;
- Figur 6 und 7: jeweils eine konkav-konvexe Glaslinse;
- Figur 8: eine Glaslinse mit seitlich ebenen Flächen;
- Figur 9: eine Glaslinse mit mindestens einer Fang- oder Zentrierkontur;
- Figur 10: eine Glaslinse mit einem Hinterschnitt;
- Figur 11: eine Glaslinse mit einer stufigen Struktur;
- Figur 12: eine Glaslinse welche als Doppellinse ausgebildet ist;
- Figur 13: eine Glaslinse mit einem Gewinde;
- Figur 14: eine Glaslinse mit einer Öffnung;
- Figur 15: eine Glaslinse mit einer refraktiven Struktur und einer diffraktiven Struktur;
- Figur 16: eine Glaslinse mit einer diffraktiven Struktur;
- Figur 17: eine Glaslinse mit einer refraktiven Struktur;
- Figur 18: eine Glaslinse mit einer wasserabweisenden Oberfläche 18;
- Figur 19: eine Glaslinse mit mehreren Zonen;
- Figur 20: eine komplexe Glaslinse bzw. eine Freiformglaslinse.

In den nachfolgenden Figuren sind identische Teile mit identischen Bezugszeichen versehen.

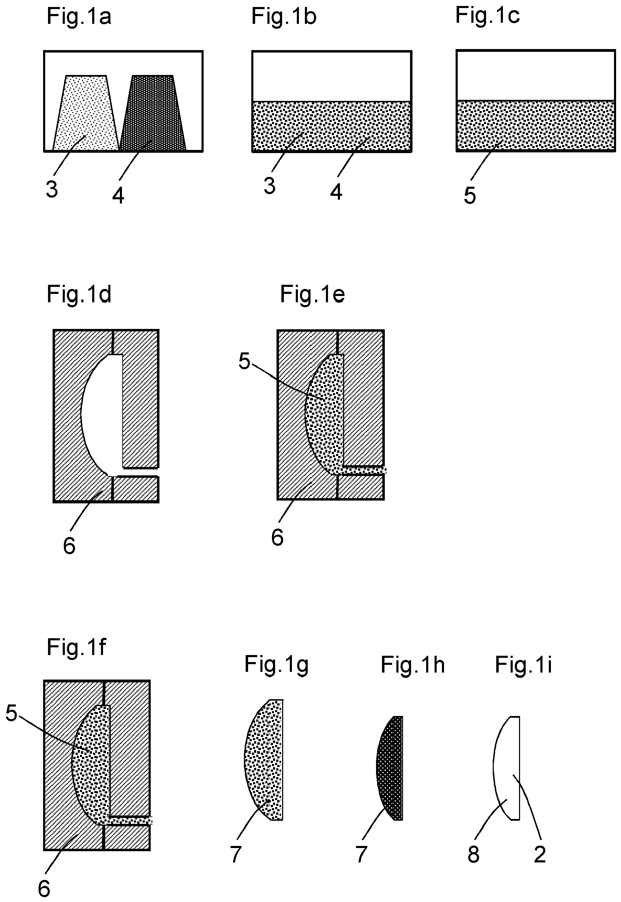

Figur 1a bis 1i zeigt ein Verfahren zur Herstellung mindestens einer Glaslinse 2.

Gemäß Figur 1a sind mindestens Glaspulverpartikel 3 oder Quarzglaspulverpartikel und ein organischen Bindemittel 4 zur Mischung vorgesehen. Hierzu ist beispielsweise eine Mischkammer vorgesehen.

Gemäß Figur 1b sind mindestens kristalline Glaspulverpartikel 3 oder Quarzglaspulverpartikel mit einem organischen Bindemittel 4 gemischt. Hierzu ist beispielsweise eine automatisierte Mischvorrichtung vorgesehen.

Die Glas-/Bindemittelmischung 5 aus mindestens Glaspulverpartikel 3 und organischem Bindemittel 4 wird gemäß Figur 1c erhitzt wird bis diese teigig oder flüssig ist. Hierzu ist beispielsweise ein Ofen oder eine Heizvorrichtung vorgesehen.

Eine Spritzgussform 6 gemäß Figur 1d für die Glas-/Bindemittelmischung 5 wird ebenfalls erhitzt.

Gemäß Figur 1e wird die Glas-/Bindemittelmischung 5 mittels Druck in die Spritzgussform gespritzt. Hierzu ist eine Spritzdüse, ein Einfüllstutzen oder ähnliches vorgesehen. Weiter ist eine Druckvorrichtung vorgesehen um die Glas-/Bindemittelmischung 5 mit Druck zu beaufschlagen.

Die Spritzgussform 6 mit der Glas-/Bindemittelmischung 5 wird gemäß Figur 1f abgekühlt. Hierzu ist beispielsweise eine Kühlvorrichtung vorgesehen.

Der nach dem Abkühlen entstandene feste Glas-/Bindemittelkörper 7 wurde gemäß Figur 1g entformt. Hierzu ist beispielsweise eine Entformvorrichtung vorgesehen.

Gemäß Figur 1h wurde dem Glas-/Bindemittelkörper 7 das Bindemittel 4 durch Entbindern entzogen. Hierzu ist eine Entbindevorrichtung vorgesehen.

Nachdem der verbleibende Glaskörper 8 gemäß Figur 1i gesintert wurde, ist nach dem Sintern die Glaslinse 2 gebildet.

Gemäß Figur 1a bis 1i werden Glaslinsen 2 im Spritzgussprozess bzw. Spritzgussverfahren hergestellt. Nach dem Entbinder- und Sinterprozess besitzt die Glaslinse 2 bereits Oberflächen mit einer hohen Oberflächengüte, so dass keine Nacharbeit mehr erforderlich ist und die Glaslinse 2 direkt in einem optischen System bzw. einem optoelektronischen Sensor verwendet werden kann.

Beim vorliegenden Glasspritzguss erhält man direkt nach dem erfindungsgemäßen Herstellungsverfahren spannungsfreie Glaslinsen 2.

Bei der vorliegenden Glaslinse 2 ist fast keine Nacharbeit oder gar keine Nacharbeit, wie beispielsweise Polieren oder Schleifen mehr notwendig ist.

Somit können Oberflächen der Glaslinse 2 gebildet werden mit einem Mittenrauwert von ca. kleiner 0,4 µm, bevorzugt bis ca. kleiner 0,2 µm und besonders bevorzugt bis kleiner 0,1 µm.

Die Glas-/Bindemittelmischung 5 und die Spritzgussform 6 werden gemäß Figur 1c und Figur 1d gleichmäßig erwärmt und dann wird die Glas-/Bindemittelmischung 5 in die Spritzgussform 6 gespritzt, gemäß Figur 1e.

Das Ausgangsmaterial besteht aus Glaspulverpartikeln 3 oder Quarzglaspulverpartikeln bzw. Siliziumoxidpulverpartikeln und einem organischen Bindemittel 4, dass die Verbindung zwischen den Partikeln herstellt.

Die Glaspulverpartikel 3 werden sehr fein, nämlich in Größen im nm-Bereich mit dem organischen Bindemittel 4 gemischt gemäß Figur 1b. Dadurch entsteht bereits bei der Mischung ein sehr feines Pulvergemisch, wodurch in der Schmelze, also im teigigen oder flüssigen Zustand der Glas-/Bindemittelmischung 5 eine homogene Mischung gebildet wird, gemäß Figur 1c.

Gemäß Figur 1b weist das organische Bindemittel 4 beispielsweise Polyacetat, Polyoxymethylen und/oder Wachs auf.

Gemäß Figur 1b weist die Glas-/Bindemittelmischung 5 beispielsweise mindestens 40 Volumen-%, mindestens 50 Volumen-%, mindestens 60 Volumen-% oder mindestens 65 Volumen-% Glaspulverpartikel 3 oder Quarzglaspartikel auf.

Gemäß der Erfindung können auch noch höhere Anteile von Glaspulverpartikel 3 oder Quarzglaspartikel vorgesehen sein, von mindestens 70 Volumen-%, oder mindestens 75 Volumen-%.

Je höher der Anteil der Glaspulverpartikel 3 ist desto kompakter und damit formstabiler ist ein gebildeter Glas-/Bindemittelkörper 7 gemäß Figur 1g, welcher auch als ,Grünling' bezeichnet wird, welcher anschließend entbunden und gesintert wird. Jedoch muss auch genügend Bindemittel 4 vorhanden sein, um die Glaspulverpartikel 3 miteinander ausreichend formstabil zu verbinden.

Beim Entbindern gemäß Figur 1h wird der Glas-/Bindemittelmischung 5 des Glas-/Bindemittelkörpers 7 das organische Bindemittel 4 entzogen. Dazu wird der Glas-/Bindemittelkörper 7 soweit erhitzt, dass das Bindemittel 4 entweichen kann. Um die Struktur des verbleibenden Glaskörpers 8 während des Entbinderns zu erhalten sind ggf. weitere Formen bzw. Stützformen vorgesehen, die das Entweichen des Bindemittels 4 ermöglichen.

Im anschließenden Sinterprozess bzw. Sinterverfahren gemäß Figur 1i wird der Glaskörper 8 umgangssprachlich gebacken, so dass eine Porosität des Glaskörpers 8 verschwindet und ein homogener einstückiger Glaskörper 8 als Glaslinse 2 entsteht, wobei die Glaspulverpartikel 3 nahezu vollständig verschmelzen bzw. verschmolzen sind.

Sowohl beim Entbindern, wie auch beim Sintern schrumpft die Glaslinse 2 auf die gewünschten finalen Abmessungen. Der Grand der Schrumpfung kann beispielsweise 10 bis 30 Volumen-% betragen und wird im Wesentlichen durch das Mischungsverhältnis der Glas-/Bindemittelmischung 5 bestimmt. Der Grad der Schrumpfung wird daher bereits bei der Konstruktion der Spritzgussform und der Größe der Spritzgussform berücksichtigt.

Das Entbindern und Sintern kann unabhängig getrennt nacheinander erfolgen oder aber auch gleichzeitig in einem Prozess-Schritt.

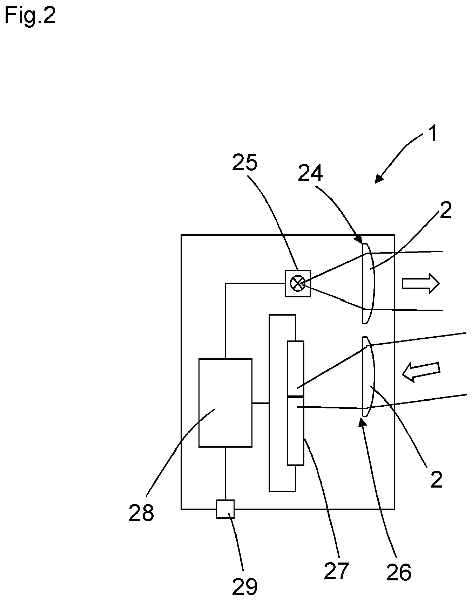

Figur 2 zeigt einen optoelektronischen Sensor 1 mit mindestens einer Glaslinse 2. Bei dem optoelektronischen Sensor 1 kann es sich beispielshaft um einen Triangualationssensor oder Triangulationstaster handeln. Der optoelektronische Sensor 1 weist hierzu einen Lichtsender 25 mit einer Laserbeleuchtung und einer Senderlinse 24 auf, um einen Lichtfleck auf einem Objekt zu erzeugen. Das empfangene Licht wird über eine Empfangslinse 26 auf einen ortsauflösenden Empfänger 27 gerichtet und dort beispielsweise abgebildet. Aufgrund des Auftreffortes kann mittels einer Steuer- und Auswerteeinheit 28 die Entfernung des Objektes ermittelt werden und ein Objektfeststellungssignal bzw. ein Entfernungssignal an einem Ausgang 29 ausgegeben werden. Die Sendelinse 24 und/oder Empfangslinse 26 kann durch die Glaslinse 2 gebildet sein. Auch Linsen anderer optoelektronischer Sensoren 1, wie z. B. Lichtschranken, Distanzsensoren, Farbsensoren, Kontrastsensoren, Lichtgitter oder ähnliche Sensoren können eine erfindungsgemäße Glaslinse 2 aufweisen.

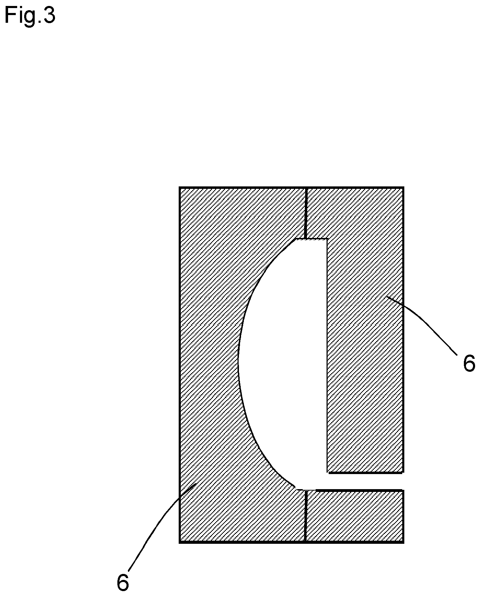

Figur 3 zeigt beispielhaft die Spritzgussform 6 für eine Glaslinse 2. Diese besteht in vorliegendem Beispiel aus mindestens zwei Teilen die jeweils ein Teil der Spritzgussform 6 für die Glaslinse 2 bereitstellen. An mindestens einer Stelle ist ein Zulauf bzw. ein Einfüllstutzen für die Glas-/Bindemittelmischung 5 vorhanden. Eine nicht dargestellte Entlüftungsöffnung bzw. Entlüftungsöffnungen sind ebenfalls vorgesehen und vorhanden.

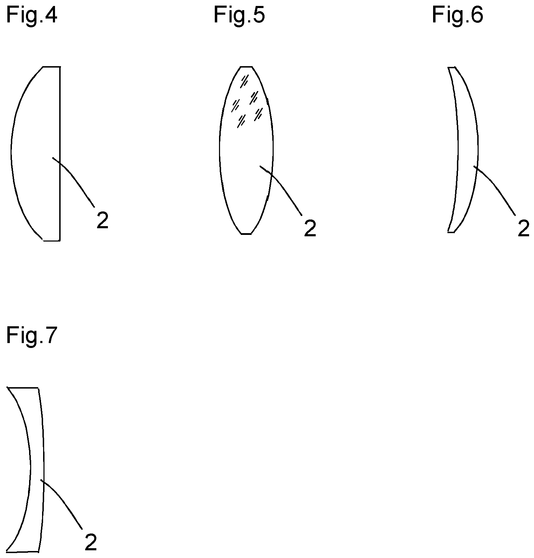

Bei der Glaslinse 2 kann es sich vorzugsweise gemäß Figur 4 um eine sphärische Glaslinse 2 handeln. Dabei ist mindestens eine optisch aktive Fläche sphärisch.

Es können auch bi-konvexe gemäß Figur 5, plan-konvexe, konkav-konvexe gemäß Figur 6 und 7, konvex-konkave, plan-konkave oder bi-konkave oder ähnliche Glaslinsen 2 hergestellt werden. Weiter können auch asphärische Glaslinsen 2, Mehrbereichsglaslinsen oder auch Freiformglaslinsen hergestellt werden, je nach gewünschtem Anwendungsfall des optoelektronischen Sensors 1.

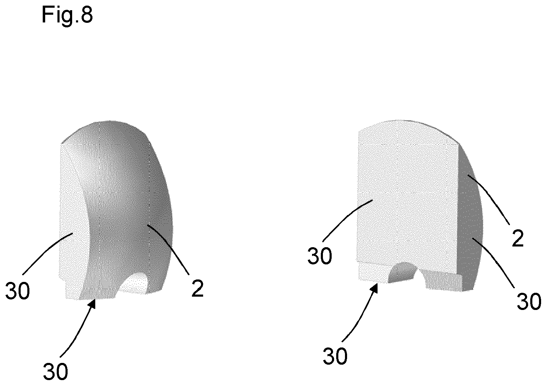

Gemäß Figur 8 weist die Glaslinse 2 mindestens eine ebene seitlich Fläche 30 auf. Dadurch kann die Glaslinse 2 kompakter hergestellt werden, da die Glaslinse 2 seitlich begrenzt ist. Beispielsweise weist die Glaslinse 2 zwei gegenüberliegende ebene seitliche Flächen auf. Die zugehörige Spritzgussform 6 weist eine Kontur bzw. Form für die mindestens eine ebene seitlich Fläche 30 auf.

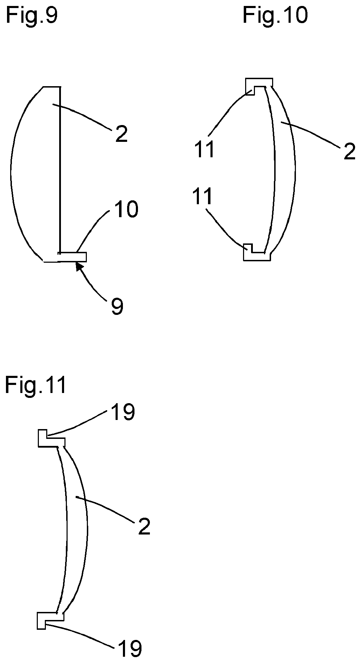

Gemäß Figur 9 weist die Glaslinse 2 mindestens eine Fang- oder Zentrierkontur 9 auf. Die Fang- oder Zentrierkontur 9 dient dazu die Glaslinse 2 zu zentrieren und/oder zu fixieren. Die zugehörige Spritzgussform 6 weist eine Kontur bzw. Form für die mindestens eine Fang- oder Zentrierkontur 9 auf.

Gemäß Figur 9 weist die Glaslinse 2 mindestens einen Fang- oder Zentrierstift 10 auf. Der Fang- oder Zentrierstift 10 dienen dazu die Glaslinse 2 zu zentrieren und/oder zu fixieren. Die zugehörige Spritzgussform 6 weist eine Kontur bzw. Form für den mindestens eine Fang- oder Zentrierstift 10 auf.

Gemäß Figur 10 weist die Glaslinse 2 mindestens einen Hinterschnitt 11 auf. Der Hinterschnitt 11 kann beispielsweise die Befestigung bzw. Zentrierung der Glaslinse 2 verbessern. Die zugehörige Spritzgussform 6 weist eine Kontur bzw. Form für den mindestens einen Hinterschnitt 11 auf, wobei ein Schieber vorgesehen ist um die Glaslinse 2 zu entformen.

Gemäß Figur 11 weist die Glaslinse 2 mindestens eine stufige Struktur 19 auf. Die stufige Struktur 19 kann beispielsweise die Befestigung bzw. Zentrierung der Glaslinse 2 verbessern. Die zugehörige Spritzgussform weist eine Kontur bzw. Form für die mindestens eine stufige Struktur 19 auf.

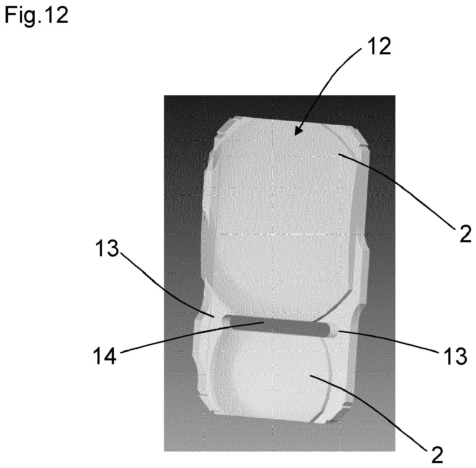

Gemäß Figur 12 ist die Glaslinse 2 eine Doppellinse 12, wobei die zwei Glaslinsen 2 der Doppellinsen 12 über einstückige seitliche Stege 13 miteinander verbunden sind, wobei zwischen den Glaslinsen 2 und zwischen den Stegen 13 ein Durchbruch 14 vorhanden ist. Damit ist die Doppellinse 12 einstückig ausgebildet und die zwei Glaslinsen 2 der Doppellinse 12 sind bereits durch den Herstellungsprozess zueinander ausgerichtet und in ihrer Lage zueinander definiert. Die zugehörige Spritzgussform weist eine Kontur bzw. Form für die Doppellinse 12 auf.

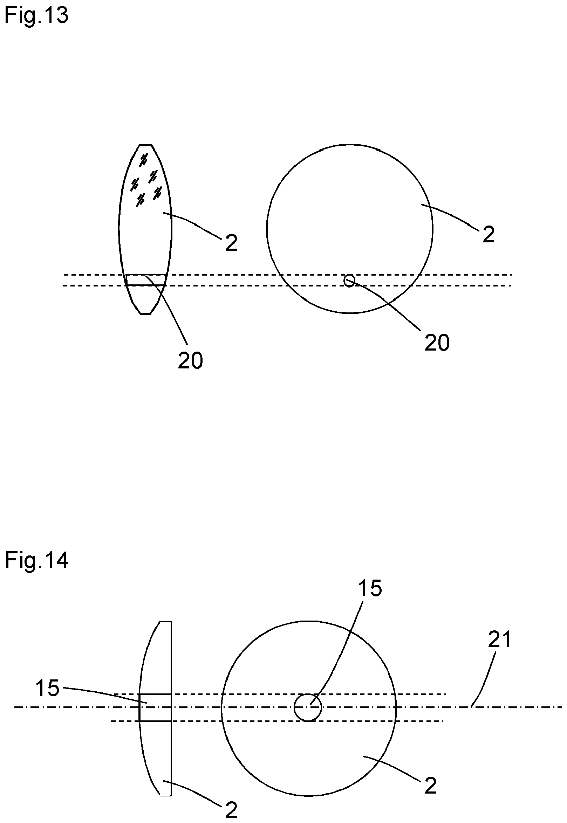

Gemäß Figur 13 weist die Glaslinse 2 mindestens ein Gewinde 20 auf. Die Glaslinse 2 ist gemäß Figur 13 in einer Seitenansicht und in einer Frontansicht dargestellt. Mittels des Gewindes 20 kann beispielsweise eine Befestigung bzw. Zentrierung der Glaslinse 2 erfolgen. Die zugehörige Spritzgussform weist eine Kontur bzw. Form für das Gewinde 20 auf, nämlich beispielsweise einen Ausdrehkern der nach dem Erkalten des Glas-/Bindemittelkörpers 7 aus der Spritzgussform herausgedreht wird.

Gemäß Figur 14 weist die Glaslinse 2 eine Öffnung 15 entlang der optischen Achse 21 auf. Die Glaslinse 2 ist gemäß Figur 14 in einer Seitenansicht und einer Frontansicht dargestellt. Damit kann ein Autokollimationssensor realisiert werden bei dem die optische Achse des Senders und die optische Achse des Empfängers zusammenfallen. Dabei wird der Lichtstrahl des Senders durch die Öffnung der Glaslinse geführt. Die Spritzgussform weist eine Kontur bzw. Form für die Öffnung auf.

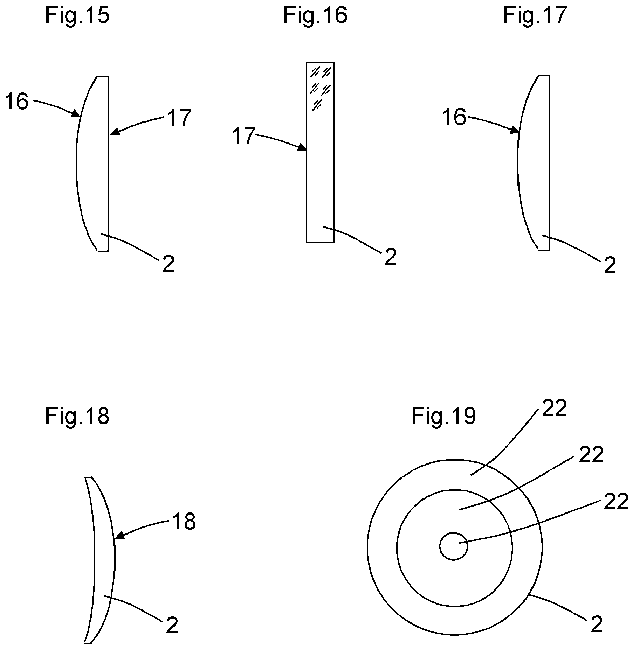

Gemäß Figur 15 weist die Glaslinse 2 mindestens eine refraktive Struktur 16 und mindestens eine diffraktive Struktur 17 auf. Die diffraktive Struktur 17 hat beispielsweise eine Strukturgröße von bis zu 1 µm. Beispielsweise weist eine erste Seite bzw. eine Vorderseite der Glaslinse 2 mindestens die refraktive Struktur 16 auf und eine zweite Seite bzw. eine Rückseite der Glaslinse 2 mindestens die diffraktive Struktur 17 auf.

Es kann beispielsweise eine Glaslinse 2 mit nur diffraktiven Strukturen 17 gemäß Figur 16 oder auch eine Glaslinse 2 mit nur refraktiven Strukturen 16 gemäß Figur 17 hergestellt und gebildet werden. Die Spritzgussform weist eine Kontur bzw. Form für die mindestens eine refraktive Struktur 16 und/oder die mindestens eine diffraktive Struktur 17 auf.

Gemäß Figur 18 weist die Glaslinse 2 eine wasserabweisende Oberfläche 18 bzw. hydrophobe Oberfläche mit einer geringen Benetzbarkeit auf. Die hydrophobe oder superhydrophobe Oberfläche ist aufgrund der Oberflächenbeschaffenheit wasserabweisend.

Beispielsweise bildet die Oberfläche etwa 10 bis 20 Mikrometer hohe und 10 bis 15 Mikrometer voneinander entfernte gewölbte Erhebungen, welche dazu führen, dass die Oberflächenspannung von Wasser erhalten bleibt und die Wassertröpfchen abperlen. Somit hat Wasser nicht mehr die Möglichkeit, in die Zwischenräume der Erhebungen zu gelangen, was zur Folge hat, dass sich die Kontaktfläche zwischen Wasser und Oberfläche erheblich verringert.

Gemäß Figur 19 weist die Glaslinse mehrere Zonen 22 mit unterschiedlichen Brennweiten auf. Beispielsweise sind die Zonen 22 ringförmig angeordnet mit einer zentralen kreisförmigen inneren Zone 22, welche von den ringförmigen Zonen 22 umgeben ist. Damit können bessere Detektionsergebnisse für einen Distanzsensor beispielsweise im Nahbereich und im Fernbereich erzielt werden.

Jedoch können die Zonen 22 auch abschnittsförmig nacheinander angeordnet sein. Beispielsweise bei einer länglich ausgebildeten Glaslinse 2.

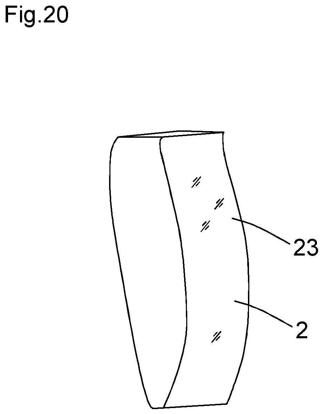

Gemäß Figur 20 ist die Glaslinse 2 eine komplexe Glaslinse bzw. eine Freiformlinse 23. Mit einer Freiformlinse 23 können im Falle einer Freiformlinse 23 für einen Lichtsender gewünschte Beleuchtungsmuster bzw. Beleuchtungsformen erzeugt werden. Beispielsweise linienförmige oder ovalförmige Beleuchtungsspots. Im Falle einer Freiformlinse 23 für einen Lichtempfänger können insbesondere für ortsaufösende Empfangselemente bzw. Zeilenempfangselemente oder Arrayempfangselemente von Triangulationslichttastern unterschiedliche Empfangsintensitäten bzw. unterschiedliche Empfangslichtformen erzeugt werden.

### Bezugszeichen:

- 1: optoelektronischer Sensor
- 2: Glaslinse
- 3: Glaspulverpartikel
- 4: organisches Bindemittel
- 5: Glas-/Bindemittelmischung
- 6: Spritzgussform
- 7: Glas-/Bindemittelkörper
- 8: Glaskörper
- 9: Fang- oder Zentrierkonturen
- 10: Fang- oder Zentrierstifte
- 11: Hinterschnitt
- 12: Doppellinse
- 13: seitliche Stege
- 14: Durchbruch
- 15: Öffnung
- 16: refraktive Struktur
- 17: diffraktive Struktur
- 18: wasserabweisende Oberfläche
- 19: stufige Struktur
- 20: Gewinde
- 21: optische Achse
- 22: Zonen
- 23: Freiformlinse
- 24: Senderlinse
- 25: Lichtsender
- 26: Empfangslinse
- 27: ortsauflösender Empfänger
- 28: Steuer- und Auswerteeinheit
- 29: Ausgang
- 30: seitliche Fläche

## Patentansprüche

1. Verfahren zur Herstellung mindestens einer Glaslinse (2),
**dadurch gekennzeichnet, dass**
mindestens kristalline Glaspulverpartikel (3) oder Quarzglaspulverpartikel mit einem organischen Bindemittel (4) gemischt werden,
die Glas-/Bindemittelmischung (5) aus mindestens Glaspulverpartikel (3) und organischem Bindemittel (4) erhitzt wird bis diese teigig oder flüssig ist,
eine Spritzgussform (6) für die Glas-/Bindemittelmischung (5) ebenfalls erhitzt wird,
die Glas-/Bindemittelmischung (5) mittels Druck in die Spritzgussform (6) gespritzt wird,
die Spritzgussform (6) mit der Glas-/Bindemittelmischung (5) abgekühlt wird, der nach dem Abkühlen entstandene feste Glas-/Bindemittelkörper (7) entformt wird,
dem Glas-/Bindemittelkörper (7) das Bindemittel (4) durch Entbindern entzogen wird,
und der verbleibende Glaskörper (8) gesintert wird, wodurch nach dem Sintern die Glaslinse (2) gebildet ist.

2. Verfahren nach Anspruch 1, **dadurch gekennzeichnet, dass** das organische Bindemittel (4) Polyacetat, Polyoxymethylen und/oder Wachs aufweist.

3. Verfahren nach Anspruch 1, **dadurch gekennzeichnet, dass** die Glas-/Bindemittelmischung (5) mindestens 40 Volumen-%, mindestens 50 Volumen-%, mindestens 60 Volumen-% oder mindestens 65 Volumen-% Glaspulverpartikel (3) oder Quarzglaspartikel aufweist.

4. Glaslinse (2), **dadurch gekennzeichnet, dass** die Glaslinse (2) mittels einem Verfahren nach mindestens einem der Ansprüche 1 bis 3 hergestellt ist.

5. Glaslinse nach Anspruch 4, **dadurch gekennzeichnet, dass** die Glaslinse (2) mindestens eine ebene seitliche Fläche aufweist.

6. Glaslinse (2) nach mindestens einem der vorhergehenden Ansprüche, **dadurch gekennzeichnet, dass** die Glaslinse (2) mindestens eine Fang- oder Zentrierkontur (9) aufweist.

7. Glaslinse (2) nach mindestens einem der vorhergehenden Ansprüche, **dadurch gekennzeichnet, dass** die Glaslinse (2) mindestens einen Fang- oder Zentrierstift (10) aufweist.

8. Glaslinse (2) nach mindestens einem der vorhergehenden Ansprüche, **dadurch gekennzeichnet, dass** die Glaslinse (2) mindestens einen Hinterschnitt (11) aufweist.

9. Glaslinse (2) nach mindestens einem der vorhergehenden Ansprüche, **dadurch gekennzeichnet, dass** die Glaslinse (2) mindestens eine stufige Struktur (19) aufweist.

10. Glaslinse (2) nach mindestens einem der vorhergehenden Ansprüche, **dadurch gekennzeichnet, dass** die Glaslinse (2) eine Doppellinse (12) ist, wobei die zwei Glaslinsen (2) der Doppellinse (12) über einstückige seitliche Stege (13) miteinander verbunden sind, wobei zwischen den Glaslinsen (2) und zwischen den Stegen (13) ein Durchbruch (14) vorhanden ist.

11. Glaslinse (2) nach mindestens einem der vorhergehenden Ansprüche, **dadurch gekennzeichnet, dass** die Glaslinse (2) mindestens ein Gewinde (20) aufweist.

12. Glaslinse (2) nach mindestens einem der vorhergehenden Ansprüche, **dadurch gekennzeichnet, dass** die Glaslinse (2) eine Öffnung (15) entlang einer optischen Achse (21) aufweist.

13. Glaslinse (2) nach mindestens einem der vorhergehenden Ansprüche, **dadurch gekennzeichnet, dass** die Glaslinse (2) refraktive Strukturen (16) und/oder diffraktive Strukturen (17) aufweist.

14. Glaslinse (2) nach mindestens einem der vorhergehenden Ansprüche, **dadurch gekennzeichnet, dass** die Glaslinse (2) eine wasserabweisende Oberfläche (18) aufweist.

15. Glaslinse (2) nach mindestens einem der vorhergehenden Ansprüche, **dadurch gekennzeichnet, dass** die Glaslinse (2) mehrere Zonen (22) mit unterschiedlichen Brennweiten aufweist.

16. Glaslinse (2) nach mindestens einem der vorhergehenden Ansprüche, **dadurch gekennzeichnet, dass** die Glaslinse (2) eine Freiformlinse (23) ist.

17. Optoelektronischer Sensor (1) mit einer Glaslinse (2) nach mindestens einem der Ansprüche 4 bis 16.
